# EUROPEAN PATENT SPECIFICATION

(11) **EP 3 731 625 B1**
(45) Date of publication and mention of the grant of the patent: **25.01.2023**
(21) Application number: 18896176.7
(22) Date of filing: 10.10.2018
(51) Int. Cl.: A01G 31/02, A01C 1/02

(54) **A PLANT GROWING CABINET**
PFLANZENWACHSTUMSSCHRANK
ARMOIRE DE CULTURE DE PLANTE

(30) Priority: 25.12.2017 TR 201721414
(43) Date of publication of application: 04.11.2020
(73) Proprietor: Arçelik Anonim Sirketi, 34445 Istanbul (TR)
(72) Inventor: TOKGOZ, Sedat, 34445 Beyoglu/Istanbul (TR); CELIK, Filiz, 34445 Beyoglu/Istanbul (TR); KANDEMIR, Nihat, 34445 Beyoglu/Istanbul (TR); KARAKAYA, Erkan, 34445 Beyoglu/Istanbul (TR)
(86) International application number: PCT/TR2018/050584
(87) International publication number: WO 2019/132814

(56) References cited:
- WO-A1-2017/111897
- CN-A- 105 210 841
- CN-A- 107 223 560
- CN-A- 107 223 560
- CN-U- 204 616 563
- CN-U- 206 760 243
- DE-U1-202009 012 904
- GB-A- 2 328 854
- US-A- 4 291 494
- US-A- 4 291 494
- US-A1- 2008 034 655

## Description

The present invention relates to a plant growing cabinet used for growing plants. The present invention particularly relates to a domestic type plant growing cabinet.

Hydrophonic cultivation is a method of agriculture based on growing plants without soil, depends on the principle of giving water and the nutrients required by the plants, to the root environment in required amounts, and is practiced in liquid or solid medium culture. The plants to be grown in soilless agriculture applications are cultivated in an enclosed environment in which the levels of water, light, and humidity and the proportion of carbon dioxide in the air, which has a significant part in growing of a plant, is maintained constant. During growing of a plant, all these elements are optimized according to the plant's growth phase, and the plant is thus enabled to grow more rapidly and is protected from harmful outer environment elements (e.g. high levels of humidity, light intensity). Plant growing units used in plant growing cabinets are provided with trays in which turf and/or soil mixtures are placed, enabling the plants to root and grow therein. Germination covers are placed on said trays, in order to enable the germinated seeds to be grown in an atmospheric air ambiance with proper humidity. Said germination covers are removed from a plant growing tray after the plants grow to a certain height, and the germination covers stored out of a plant growing cabinet may become damaged or may get lost. Likewise, depending on the internal illumination of the plant growing cabinet and the growth phase of the plants, the plants kept under a germination cover for a long time may deplete the carbon dioxide or oxygen in the air volume between the tray and the germination cover, and their growth may be affected adversely. State of the art U.S. patent document no. USD659724S discloses a domestic type plant growing cabinet. A similar cabinet is also known from CN 107 223 560 A.

State of the art European patent document no. EP0287284A1 discloses a plant growing chamber enabling cultivating plants in a sterile environment.

The aim of the present invention is to realize a germination cover providing ease of use by meeting various needs of the users in plant growing cabinets.

The plant growing cabinet realized to achieve the aim of the present invention and disclosed m independent claim 1 and the dependent claims 2 to 10, is provided with plant growing units positioned in a body. Trays in which plants are planted, containing a turf mixture in which plants are grown, are placed into said plant growing units. The light required by the plants, is obtained by means of a light source provided between two consecutive plant growing units in vertical plane.

There is a frame placed on a tray. The frame has two lateral walls, and a front and a rear wall extending in parallel to each other between said lateral walls. A germination cover placed on the frame defines a volume between the tray and the frame. Gaps form between the panels provided on the germination cover due to a user moving said panels. Likewise, said gaps are closed by a user moving said panels, thereby enabling the user to control the relative humidity of the air in said volume.

In an embodiment of the invention, the plant growing cabinet comprises a moving conveyor belt-shaped germination cover. The panels are placed on the cover so as to form a conveyor belt with gaps in between. The germination cover almost completely blocks air passage or allows air passage depending on the position of the panels arranged opposite each other on the upper and the lower surfaces of the conveyor belt. The user is thus enabled to control the relative humidity therein.

In an embodiment of the invention, the plant growing cabinet comprises a window shade-shaped germination cover. The panels in consecutive rows form a window shade shape. The user adjusts the distance between two consecutive panels by rotating the panels about their axes, and the tray can thus allow air inflow to and outflow to the volume defined by the frame and the germination cover. By this, relative humidity can be controlled and a quality perception is created for the users by improving the rate of germination.

In an embodiment of the invention, a first actuator is provided on the germination cover. The user is enabled to move the germination cover between an open and a closed position by means of the first actuator. All panels provided on the window shade-shaped germination cover and the conveyor-shaped germination cover can be simultaneously moved thanks to the first actuator, providing ease of use for the user.

In an embodiment of the invention, the first actuator is driven by an engine. Using the engine provides ease of use for the user.

In an embodiment of the invention, a sensor is provided in the volume between the germination cover and the tray. Said sensor measures the values such as temperature, relative humidity, and carbon dioxide and oxygen ratios of the air in said volume. A precise usage of the plant growing cabinet is enabled by providing said values to the user.

In an embodiment of the invention, the plant growing cabinet comprises a control unit used to control the operational parameters. The control unit compares the values received from the sensor with the values input by the producer, and enables the panels to move by activating the engine when it deems necessary. As a result of this motion, the size of the openings on the germination cover change, and the plants are enabled to be grown in conditions suitable for their actual growth phase. Ease of use is provided in the plant growing cabinet by means of the control unit.

In an embodiment of the invention, a light sensor is provided on the germination cover. The light sensor transmits the acquired light intensity information to the control unit. Whether the plants receive sufficient light is thus determined.

In an embodiment of the invention, the light sensor is a photodiode type light sensor. The photodiode light sensors improve maintenance costs thanks to being cost-effective.

In an embodiment of the invention, the germination cover is made of electrochromic material. The control unit is capable of adjusting the radiance of the light source according to the data obtained from the light sensor. In cases when the intensity of the light entering into the plant growing cabinet from the outer environment, is high, the control unit can turn the light source off, but the plants may still be subjected to more light than they require. In this case, the control unit transmits electricity to the germination cover, reducing light transmittance of the cover. The plants are thus prevented from being damaged due to light.

In an embodiment of the invention, the plant growing cabinet comprises a frame having a telescopic system enabling adjusting its height. By adjusting the height of the frame, it is enabled to be used for a variety of plants whose heights reach varying levels in the germination phase.

By means of this invention, the plants being grown in plant growing cabinets are enabled to be cultivated in atmospheric conditions with the optimal relative humidity during germination process.

The plant growing cabinet realized to achieve the aims of the present invention is illustrated in the accompanying drawings, wherein:

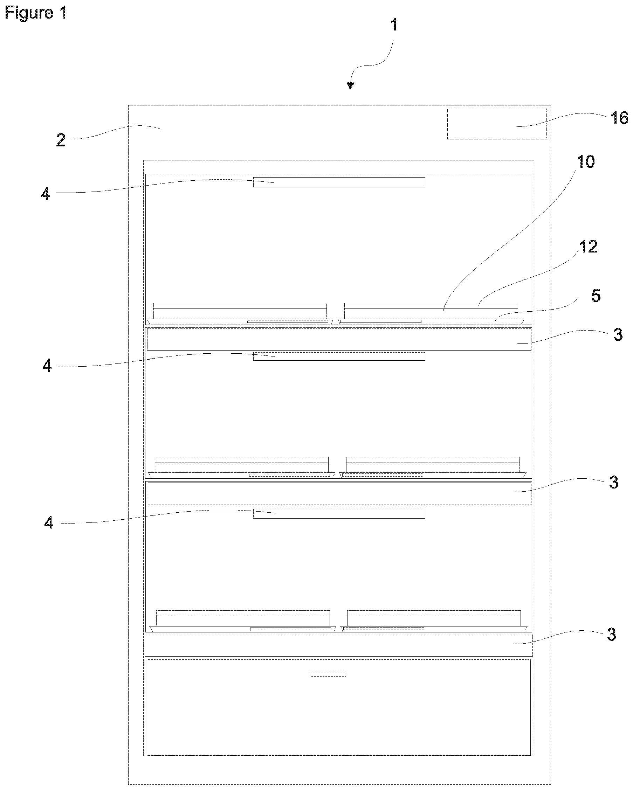

Figure 1 is a frontal view of the plant growing cabinet.

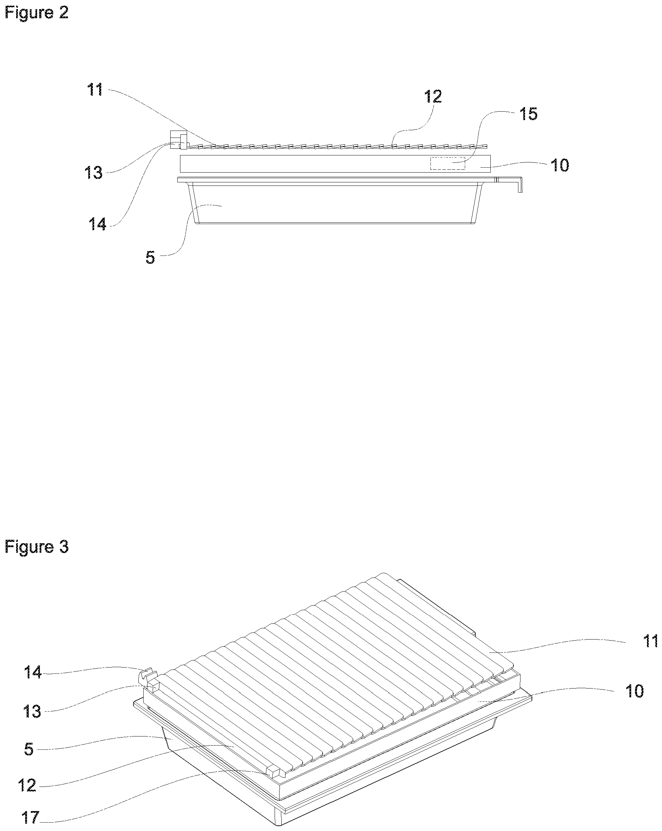

Figure 2 is a side view of the tray and the window shade-shaped germination cover in closed position.
Figure 3 is a perspective view of the tray and the window shade-shaped germination cover in closed position.

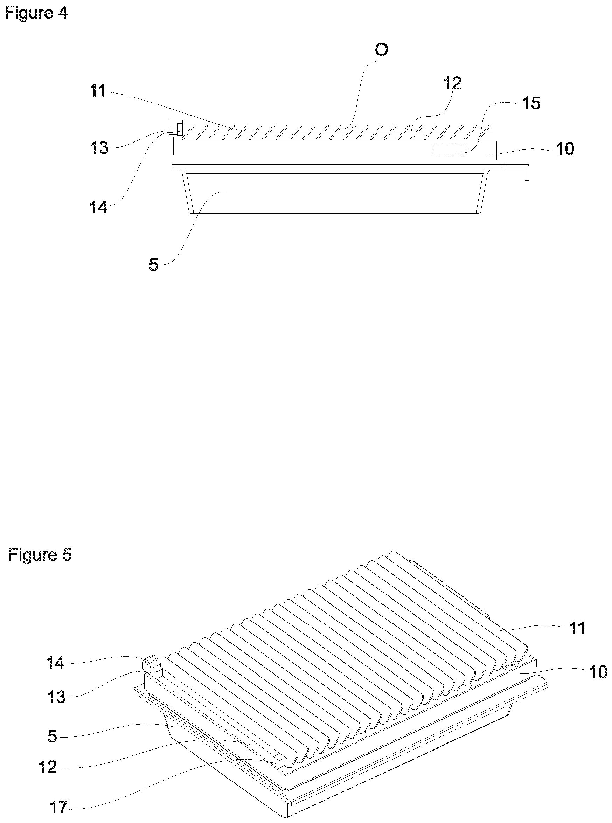

Figure 4 is a side view of the tray and the window shade-shaped germination cover in open position.
Figure 5 is a perspective view of the tray and the window shade-shaped germination cover in open position.

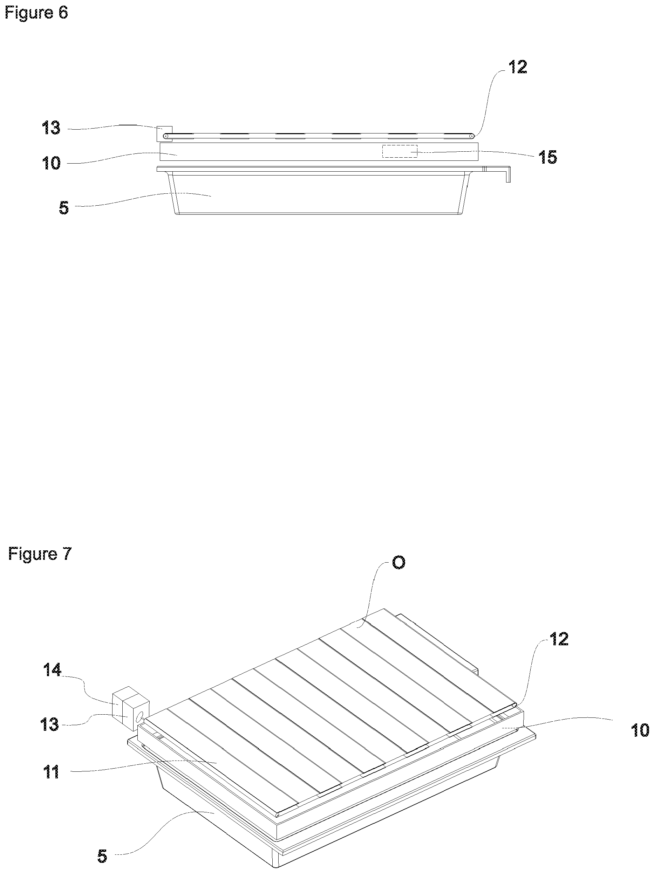

Figure 6 is a side view of the tray and the conveyor belt-shaped germination cover in open position.
Figure 7 is a perspective view of the tray and the conveyor belt-shaped germination cover in open position.

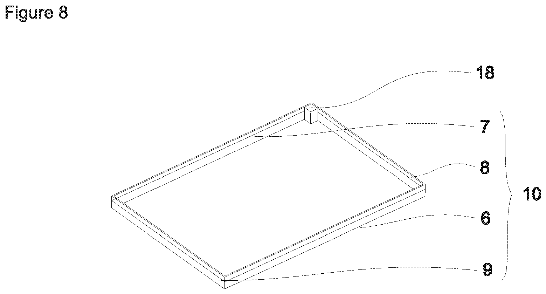

Figure 8 is a perspective view of the frame.

The elements in the figures are numbered individually and the correspondence of these numbers are given hereinafter.
1. Plant growing cabinet
2. Body
3. Plant growing unit
4. Light source
5. Tray
6. First lateral wall
7. Second lateral wall
8. Front wall
9. Rear wall
10. Frame
11. Panel
12. Germination cover
13. First actuator
14. Engine
15. Sensor
16. Control unit
17. Light sensor
18. Second actuator
O: Opening

The plant growing cabinet (1) of the invention comprises a body (2), at least one plant growing unit (3) provided in the body (2), a light source (4) positioned above the plant growing unit (3), generating the light required by the plants to be grown, a tray (5) placed in a plant growing unit (3), in which the mixture enabling plants to grow is placed, and a frame (10) placed on the tray (5), having two lateral walls (6, 7) and a front wall (8) and a rear wall (9) extending opposite each other between the lateral walls (6, 7).

The plant growing cabinet (1) of the invention comprises a germination cover (12) comprising at least two panels (11) placed on the frame (10), and having a closed position in which the panels (11) are positioned so as to be almost completely airtight and an open position in which it enables air flow to pass therethrough by means of an opening (O) forming thereon by the panels (11) being moved. Plant growing units (3) placed in the body (2), are provided in the plant growing cabinets (1) of the invention. Said plant growing units (3) are placed on the telescopic rails provided on the lateral walls of the body (2). One or more trays (5) are placed on the plant growing units (3). A mixture consisting of turf and/or soil are placed in the trays (5), containing the humidity and materials such as minerals required by the plants to grow. The plants receive the light they require for growing, by means of the light sources (4) positioned between consecutive plant growing units (3) on the vertical plane. There is a frame (10) placed on a tray (5). The frame (10) has a first lateral wall (6), a second lateral wall (7), and a front wall (8) and a rear wall (9) extending between two lateral walls (6, 7). The frame (10) can be placed separately on the trays (5), or a larger frame (10) can be placed on the plant growing unit (3). The germination cover (12) is placed on said frame (10). The germination cover (12) has two separate positions, namely an open and a closed position. In the open position, the air flow in the plant growing cabinet (1) can freely access the tray (5) and therefore the plants being grown, through the openings (O) provided on the germination cover (12). In the closed position, the volume between the germination cover (12), frame (10) and the tray (5) is disconnected from the plant growing cabinet (1) in substantially hermetic manner. The switching of the germination cover (12) between the open and the closed positions is realized by means of the panels (11) provided at the germination cover (12). By moving, the panels (11) settle on one another, or move closer to or farther from each other. Air flow passes through the openings (O) thus formed. The user is thereby enabled to control the relative humidity required to be present in the air during germination and earlier growth phases of the plants, consequently improving the yield of the plant growing cabinet (1) and user satisfaction. In addition, the large-sized germination covers used in plant growing cabinets (1) only during germination and stored by being removed out of the plant growing cabinet (1) once germination process completes, are prevented from becoming non-utilizable due to physical damages such as being broken or fractured, thereby improving maintenance costs.

In another embodiment of the invention, the plant growing cabinet (1) comprises a conveyor belt like movable band-shaped germination cover (12), having two panels (11) positioned so as to have an opening (O) in between, allowing maximum air passage when said two panels (11) are superimposed, allowing partial air passage when said two panels (11) are partly superimposed, and almost completely blocking air passage when said panels (11) and the opening (O) are superimposed. The conveyor belt-shaped germination cover (12) consists of consecutive panels (11) and openings (O) having similar widths and the same length. The superimposition proportions of the openings (O) with respect to the vertical plane on the upper and the lower surfaces of the conveyor belt-shaped germination cover (12), are controlled by the user. The user is thus enabled to control the relative humidity of the volume between the germination cover (12) and the tray (5). As a result, the germination rate of the plants are increased and the yield of the plant growing cabinet (1) is improved, creating a product quality perception for the user.

In another embodiment of the invention, the plant growing cabinet (1) comprises a germination cover (12) having at least one panel (11) rotatable about its horizontal axis, forming a window shade-shaped structure by being arranged on the frame (10). The panels (11) rest on the frame (10) by means of the cylindrical extensions disposed on their ends. The user can rotate the panels (11) about their horizontal axis together as a group or individually, consequently downsizing the opening between two consecutive panels, and this enables the user to control the relative humidity of the volume between the germination cover (12) and the tray (5). As a result, the germination rate of the plants and the yield of the plant growing cabinet (1) are increased, creating a product quality perception for the user.

In another embodiment of the invention, the plant growing cabinet (1) comprises a first actuator (13) enabling the germination cover (12) to be moved between the open and the closed positions. The conveyor belt-shaped germination cover (12) moves upon the user activating the first actuator (13), changing the superimposition ratio of the openings (O) on the upper and the lower surfaces of the germination cover (12). Likewise, the panels (11) provided on the window shade-shaped germination cover (12) begin moving upon activation of the first actuator (13). In the closed position, the panels (11) delimit air passage by contacting each other at their end points, and allow air passage in the open position by assuming a position in which they are parallel to each other. The user is provided ease of use thanks to the first actuator (13).

In another embodiment of the invention, the plant growing cabinet (1) comprises an engine (14) enabling by driving the first actuator (13) the germination cover (12) to be moved between the open and the closed positions. The requirement of the panels (11) being touched by a user, is eliminated thanks to the engine (14), creating ease of use. In addition, the panels (11) are prevented from being damaged due to being touched, improving maintenance costs.

In another embodiment of the invention, the plant growing cabinet (1) comprises a sensor (15) positioned between the germination cover (12) and the tray (5), measuring the temperature, and the relative humidity and the proportions of carbon dioxide and oxygen in the air. By this, precise information is provided to the user, regarding the relative humidity, temperature and concentrations of carbon dioxide and oxygen, which are of utmost importance in growing plants, creating a product quality perception for the user.

In another embodiment of the invention, the plant growing cabinet (1) comprises a control unit (16) stimulating the engine (14) by comparing the values obtained from the sensor (15) with the values predetermined by the producer, and enabling the germination cover (12) to be moved between the open and the closed positions. Information on various types of plants and information such as humidity, temperature, light intensity and carbon dioxide concentration required by said plants during varying growth phases, are presaved by the producer on the memory of the control unit (16). The control unit (16) compares these values with the values obtained by means of the sensor (15), and enables the germination cover (12) to be moved between the open and the closed positions by activating the engine (14) if it deems necessary. Using the control unit (16) enables the plant growing cabinet (1) to be operated without human intervention, thereby providing ease of use.

In another embodiment of the invention, the plant growing cabinet (1) comprises a germination cover (12) on which at least one light sensor (17) is positioned. Obtained light intensity values are transmitted to the control unit (16), and the intensity of the light received on the germination cover (12) is thus determined.

In another embodiment of the invention, the plant growing cabinet (1) comprises a germination cover (12) having a photodiode type light sensor (17). The low-cost of photodiode type sensors are reflected on the cost of plant growing cabinet (1), reducing the product cost for the users. Likewise, the users are incurred a low maintenance cost in case the light sensor (17) malfunctions and requires replacement.

In another embodiment of the invention, the plant growing cabinet (1) comprises a germination cover (12) made of electrochromic material, and a control unit (16) comparing the values obtained by the light sensor (17) with the values predetermined by the producer, and increasing the light intensity of the light generated by the light source (4) and/or increasing the light transmittance of the germination cover (12) by transmitting electric current with proper polarization to the germination cover (12) if the measured value is below a limit value range predetermined by the producer; reducing the light intensity of the light produced by the light source (4) and/or reducing the light transmittance of the germination cover (12) by transmitting electric current with proper polarization to the germination cover (12) if the measured value is above the limit value range predetermined by the producer; and maintaining the operational parameters if the measured value is within the limit value range predetermined by the producer. The light transmittance of electrochromic materials change when electric current is applied thereon. The control unit (16) compares the values obtained by the light sensor (17) with the values predetermined and saved in its memory by the producer. In case when the light intensity is higher than required, the control unit (16) reduces the light intensity of the light source (4). In case when light is received from the outer environment into the plant growing cabinet (1), reducing the intensity of the light source (4) may not be sufficient. In this case, the control unit (16) transmits electricity to the germination cover (12), reducing light transmittance of the cover (12). Likewise, in cases when the measured value is not sufficient for the growth of the plants, the control unit (16) increases the light transmittance of the germination cover (12) and/or increases the intensity of the light source (4). In case when the measured value is within the limit value range, the control unit (16) maintains the operational parameters. When a case is experienced which does not meet any of the above-mentioned criteria, the control unit (12) opts for the operational parameters minimizing the overall energy consumption. The electrochromic germination cover (12) enables the cultivated plants to be grown in the most suitable relative humidity environment and the light intensity reaching the plants to be precisely controlled, thereby improving the product yield.

In another embodiment of the invention, the plant growing cabinet (1) comprises a germination cover (12) having telescopic lateral, front and rear walls (6, 7, 8, 9), and a second actuator (18) enabling the distance between the germination cover (12) and the tray (5) to be adjusted according to the plant type being grown by enabling the walls to be raised or lowered. The lateral, front and the rear walls (6, 7, 8, 9) of the frame (10) comprise telescopic connection properties. The telescopic system can be opened and closed by means of the second actuator (18) provided on the frame (10), enabling adjusting the height of the frame (10). The vertical distance between the germination cover (12) and tray (5) can thus be adjusted. Consequently, the position of a germination cover (12) can be adjusted according to a variety of plant types and the actual growth phase of the plant types, thereby providing ease of use for the user.

In another embodiment of the invention, the second actuator (18) is controlled by the control unit (16). The control unit (16) is capable of adjusting the frame height according to the plant type being grown in a tray (5), thereby minimizing user intervention to the plant growing cabinet (1) and thus providing ease of use for the user.

In the plant growing cabinet (1) of the invention, the germination cover (12) is enabled to occupy a minimum space in the body. In addition, the control unit (16) executes the function of controlling the openings (O) provided on the germination covers (12), and ease of use is thus achieved.

## Claims

1. A plant growing cabinet (1) **comprising** a body (2), at least one plant growing unit (3) provided in the body (2), a light source (4) positioned above the plant growing unit (3), generating the light required by the plants to be grown, a tray (5) placed in a plant growing unit (3), in which the mixture enabling plants to grow is placed, **characterized by** a frame (10) placed on the tray (5), having two lateral walls (6, 7) and a front wall (8) and a rear wall (9) extending opposite each other between the lateral walls (6, 7), and a germination cover (12) comprising at least two panels (11) placed on the frame (10), and having a closed position in which the panels (11) are positioned so as to be almost completely airtight and an open position in which it enables air flow to pass therethrough by means of an opening (O) forming thereon by the panels (11) being moved.

2. A plant growing cabinet (1) according to claim 1, **characterized by** a conveyor belt like movable band-shaped germination cover (12), the moving conveyor belt-shaped germination cover (12) having two panels (11) positioned so as to have an opening (O) in between,
∘ allowing maximum air passage when two panels (11) are superimposed,
∘ allowing partial air passage when two panels (11) are partially superimposed, and
∘ almost completely blocking air passage when the panels (11) and the openings (O) are superimposed.

3. A plant growing cabinet (1) according to claim 1, **characterized by** the germination cover (12) having at least one panel (11) arranged on the frame (10) forming a window shade-shaped structure by rotating about the horizontal axis,.

4. A plant growing cabinet (1) according to any one of the preceding claims, **characterized by** a first actuator (13) enabling the germination cover (12) to be moved between the open and the closed positions.

5. A plant growing cabinet (1) according to claim 4, **characterized by** an engine (14) enabling the germination cover (12) to be moved between the open and the closed positions by driving the first actuator (13).

6. A plant growing cabinet (1) according to any one of the preceding claims, **characterized by** a sensor (15) positioned between the germination cover (12) and the tray (5), measuring the temperature, relative humidity and the proportions of carbon dioxide and oxygen of the air therein.

7. A plant growing cabinet (1) according to claim 5 and claim 6, **characterized by** the control unit (16) stimulating the engine (14) and enabling the germination cover (12) to be moved between the open and the closed positions by comparing the values obtained from the sensor (15) with the values predetermined by the producer.

8. A plant growing cabinet (1) according to any one of the preceding claims, **characterized by** the germination cover (12) on which at least one light sensor (17) is positioned.

9. A plant growing cabinet (1) according to claim 8, **characterized by** the germination cover (12) having a photodiode type light sensor (17).

10. A plant growing cabinet (1) according to the claims 8 to 9, **characterized by** the germination cover (12) made of electrochromic material, and a control unit (16) comparing the values obtained from the light sensor (17) with the values predetermined by the producer, and
o increasing the light intensity of the light generated by the light source (4) and/or increasing the light transmittance of the germination cover (12) by transmitting electric current with proper polarization to the germination cover (12) in the case the measured value being below a limit value range predetermined by the producer,
o reducing the light intensity of the light produced by the light source (4) and/or reducing the light transmittance of the germination cover (12) by transmitting electric current with proper polarization to the germination cover (12) in the case the measured value being above the limit value range predetermined by the producer, and
o maintaining the operational parameters if the measured value is within the limit value range predetermined by the producer.

## Patentansprüche

1. Ein Pflanzenzuchtschrank (1) umfasst einen Körper (2), mindestens eine im Körper (2) vorgesehene Pflanzenzuchteinheit (3), eine oberhalb der Pflanzenzuchteinheit (3) angeordnete Lichtquelle (4), die das für die zu züchtenden Pflanzen erforderliche Licht erzeugt, eine Schale (5), die in einer Pflanzenzuchteinheit (3) platziert ist, in der die Mischung platziert wird, die das Wachstum der Pflanzen ermöglicht, **gekennzeichnet ist es durch** einen auf die Schale (5) aufgesetzten Rahmen (10) mit zwei Seitenwänden (6, 7) und eine Vorderwand (8) und eine Rückwand (9), die sich einander gegenüberliegend zwischen den Seitenwänden (6, 7) erstrecken, und eine Keimabdeckung (12), die mindestens zwei Platten (11) umfasst, die auf dem Rahmen (10) platziert sind, und mit einer geschlossenen Position, in der die Paneele (11) so positioniert sind, dass sie fast vollständig luftdicht sind, und eine offene Position, in der es ermöglicht, dass ein Luftstrom hindurchgeht, mittels einer Öffnung (O), die darauf gebildet wird, indem die Platten (11) bewegt werden.

2. Ein Pflanzenzuchtschrank (1), wie in Anspruch 1 aufgeführt, ist **dadurch gekennzeichnet, dass** eine förderbandartige bewegliche bandförmige Keimabdeckung (12), wobei die bewegliche förderbandförmige Keimabdeckung (12) zwei Platten (11) aufweist, die so positioniert sind, dass sie dazwischen eine Öffnung (O) aufweisen, und
o Ermöglichen eines maximalen Luftdurchgangs, wenn zwei Platten (11) übereinander angeordnet sind,
o Ermöglichen eines teilweisen Luftdurchgangs, wenn zwei Platten (11) teilweise übereinander liegen, und
o nahezu vollständiges Blockieren des Luftdurchgangs, wenn die Platten (11) und die Öffnungen (O) übereinander angeordnet sind.

3. Ein Pflanzenzuchtschrank (1), wie in Anspruch 1 aufgeführt, ist **dadurch gekennzeichnet, dass** die Keimabdeckung (12) mindestens eine Platte (11) aufweist, die an dem Rahmen (10) angeordnet ist und durch Drehen um die horizontale Achse eine fensterjalousieförmige Struktur bildet.

4. Ein Pflanzenzuchtschrank (1), wie in einem der vorherigen Ansprüchen aufgeführt, **ist dadurch gekennzeichnet, dass** ein erster Aktuator (13) es ermöglicht, dass die Keimabdeckung (12) zwischen der offenen und der geschlossenen Position bewegt wird.

5. Ein Pflanzenzuchtschrank (1), wie in Anspruch 4 aufgeführt, **ist dadurch gekennzeichnet, dass** ein Motor (14) es ermöglicht, dass die Keimabdeckung (12) zwischen der offenen und der geschlossenen Position bewegt wird, indem der erste Aktuator (13) angetrieben wird.

6. Ein Pflanzenzuchtschrank (1), wie in einem der vorherigen Ansprüchen aufgeführt, **ist dadurch gekennzeichnet, dass** ein Sensor (15), der zwischen der Keimabdeckung (12) und der Schale (5) angeordnet ist und die Temperatur, die relative Feuchtigkeit und die Anteile von Kohlendioxid und Sauerstoff der darin befindlichen Luft misst.

7. Ein Pflanzenzuchtschrank (1), wie in Anspruch 5 und 6 aufgeführt, **ist dadurch gekennzeichnet, dass** die Steuereinheit (16) den Motor (14) anregt und ermöglicht, dass die Keimabdeckung (12) zwischen der offenen und der geschlossenen Position bewegt wird, indem sie die vom Sensor (15) erhaltenen Werte mit den vom Hersteller vorgegebenen Werten vergleicht.

8. Ein Pflanzenzuchtschrank (1), wie in einem der vorherigen Ansprüchen aufgeführt, **ist dadurch gekennzeichnet, dass** auf dem Keimdeckel (12) mindestens ein Lichtsensor (17) angeordnet ist.

9. Ein Pflanzenzuchtschrank (1), wie in Anspruch 8 aufgeführt, ist **dadurch gekennzeichnet, dass** die Keimabdeckung (12) einen Lichtsensor (17) vom Photodiodentyp aufweist.

10. Ein Pflanzenzuchtschrank (1), wie in den Ansprüchen 8 bis 9 aufgeführt, **ist dadurch gekennzeichnet, dass** die Keimabdeckung (12) aus elektrochromem Material und eine Steuereinheit (16), die die vom Lichtsensor (17) erhaltenen Werte mit den vom Hersteller vorgegebenen Werten vergleicht, und
o die Lichtintensität des von der Lichtquelle (4) erzeugten Lichts erhöht und/oder Erhöhen der Lichtdurchlässigkeit der Keimabdeckung (12) durch Übertragen von elektrischem Strom mit geeigneter Polarisation zur Keimabdeckung (12), falls der gemessene Wert unterhalb eines vom Hersteller vorgegebenen Grenzwertbereichs ist,
o die Lichtintensität des von der Lichtquelle (4) erzeugten Lichts reduziert, und/oder Reduzieren der Lichtdurchlässigkeit der Keimabdeckung (12) durch Übertragen von elektrischem Strom mit geeigneter Polarisation zu der Keimabdeckung (12), falls der gemessene Wert über dem vom Hersteller vorgegebenen Grenzwertbereich ist und
o Beibehalten der Betriebsparameter, wenn der Messwert innerhalb des vom Hersteller vorgegebenen Grenzwertbereichs liegt.

## Revendications

1. Une armoire de croissance de plantes (1) comprenant un corps (2), au moins une unité de croissance de plantes (3) prévue dans le corps (2), une source de lumière (4) positionnée au-dessus de l'unité de croissance de plantes (3), générant la lumière requise par les plantes à faire pousser, un plateau (5) placé dans une unité de croissance de plantes (3), dans lequel le mélange permettant aux plantes de pousser est placé, **caractérisé par** un cadre (10) placé sur le plateau (5), présentant deux parois latérales (6, 7) et une paroi avant (8) et une paroi arrière (9) s'étendant en regard l'une de l'autre entre les parois latérales (6, 7), et une couverture de germination (12) comprenant au moins deux panneaux (11) placée sur le cadre (10), et ayant une position fermée dans laquelle les panneaux (11) sont positionnés de manière à être presque complètement étanches à l'air et une position ouverte dans laquelle il permet à un flux d'air de passer à travers au moyen d'une ouverture (O) formée sur celui-ci par le déplacement des panneaux (11).

2. Une armoire de croissance de plantes (1) selon la déclaration 1, **caractérisée par** un couvercle de germination en forme de bande mobile (12) semblable à une bande transporteuse, le couvercle de germination en forme de bande transporteuse mobile (12) ayant deux panneaux (11) positionnés de manière à avoir une ouverture (O) entre eux,
o permettant un passage d'air maximal lorsque deux panneaux (11) sont superposés,
o permettant un passage d'air partiel lorsque deux panneaux (11) sont partiellement superposés, et
o bloquant presque complètement le passage de l'air lorsque les panneaux (11) et les ouvertures (O) sont superposés.

3. Une armoire de croissance de plantes (1) selon la déclaration 1, **caractérisée par** le couvercle de germination (12) ayant au moins un panneau (11) disposé sur le cadre (10) formant une structure en forme d'ombre de fenêtre en tournant autour de l'axe horizontal.

4. Une armoire de croissance de plantes (1) selon l'une quelconque des déclarations précédentes, **caractérisée par** un premier actionneur (13) permettant de déplacer le couvercle de germination (12) entre les positions ouverte et fermée.

5. Une armoire de croissance de plantes (1) selon la déclaration 4, **caractérisée par** un moteur (14) permettant au couvercle de germination (12) d'être déplacé entre les positions ouverte et fermée en entraînant le premier actionneur (13).

6. Une armoire de croissance de plantes (1) selon l'une quelconque des déclarations précédentes, **caractérisée par** un capteur (15) positionné entre le couvercle de germination (12) et le plateau (5), mesurant la température, l'humidité relative et les proportions de dioxyde de carbone et d'oxygène de l'air qui s'y trouve.

7. Une armoire de croissance de plantes (1) selon la déclaration 5 et la déclaration 6, **caractérisée par** l'unité de commande (16) stimulant le moteur (14) et permettant au couvercle de germination (12) d'être déplacé entre les positions ouverte et fermée en comparant les valeurs obtenues à partir du capteur (15) avec les valeurs prédéterminées par le producteur.

8. Une armoire de croissance de plantes (1) selon l'une quelconque des déclarations précédentes, **caractérisée par** le couvercle de germination (12) sur lequel est positionné au moins un capteur de lumière (17).

9. Une armoire de croissance de plantes (1) selon la déclaration 8, **caractérisée par** le couvercle de germination (12) ayant un capteur de lumière de type photodiode (17).

10. Une armoire de croissance de plantes (1) selon les déclarations 8 à 9, **caractérisée par** le couvercle de germination (12) fait de matériau électro chrome, et une unité de contrôle (16) comparant les valeurs obtenues du capteur de lumière (17) avec les valeurs prédéterminées par le producteur, et
o l'augmentation de l'intensité lumineuse de la lumière générée par la source lumineuse (4) et/ou l'augmentation de la transmittance de la lumière du couvercle de germination (12) en transmettant un courant électrique avec une polarisation appropriée au couvercle de germination (12) dans le cas où la valeur mesurée est inférieure à une plage de valeurs limites prédéterminée par le producteur,
o réduire l'intensité lumineuse de la lumière produite par la source lumineuse (4) et/ou réduire la transmittance de la lumière du couvercle de germination (12) en transmettant un courant électrique avec une polarisation appropriée au couvercle de germination (12) dans le cas où la valeur mesurée est au-dessus de la plage de valeurs limites prédéterminée par le producteur, et
o maintenir les paramètres opérationnels si la valeur mesurée se situe dans la plage de valeurs limites prédéterminée par le producteur.
